# EUROPEAN PATENT SPECIFICATION

(11) **EP 4 421 702 B1**
(45) Date of publication and mention of the grant of the patent: **26.11.2025**
(21) Application number: 24156745.2
(22) Date of filing: 09.02.2024
(51) Int. Cl.: G06Q 10/08, G06Q 10/06

(54) **SYSTEM AND METHOD FOR INSPECTING GOODS IN MERCANTILE PORTS**
SYSTEM UND VERFAHREN ZUR INSPEKTION VON GÜTERN IN HANDELSHÄFEN
SYSTÈME ET PROCÉDÉ D'INSPECTION DE MARCHANDISES DANS LES PORTS MARCHANDISES

(30) Priority: 13.02.2023 IT 202300002370
(43) Date of publication of application: 28.08.2024
(73) Proprietor: La Spezia Port Service S.r.l., 19121 La Spezia (IT)
(72) Inventor: GALLETTO, Giacomo, 19037 S.STEFANO DI MAGRA (SP) (IT)
(74) Representative: Boario, Enrico

(56) References cited:
- EP-A1- 2 725 529
- WO-A2-2014/152670
- CN-A- 103 544 583

## Description

The present invention relates to a highly digitalized system for inspecting goods in mercantile ports, in particular maritime ports.

The present invention also relates to a method for inspecting goods in mercantile ports, in particular maritime ports, which can reduce the time necessary for executing the various operations.

It is known that the process of inspecting goods in mercantile ports is largely based on the use of paper documents and non-interactive photographic devices which require intense and time-consuming administration or back-office activities, as well as significant paper consumption. As a matter of fact, the process currently in use in maritime ports is totally manual and requires the use of paper forms and cameras.

By way of example, the normal workflow in a mercantile port can be described as follows. Upon reception of the data about imported and exported goods, inspection agencies notify the shipping agents about which containers of their property or under their responsibility will be subjected to inspection. The shipping agents give instructions to the proprietor of the port or terminal, e.g. with the aid of a Verifications Department of a services company, which takes care of sending such instructions to the proprietor of the port or terminal for provision of those containers which will have to be inspected. The proprietor of the port or terminal communicates which containers can be moved and prepared for inspection on a given date. Once the containers that have been actually prepared for inspection have been identified, specific officers are assigned to each inspection by the inspection agencies. Normally, the entrusted operators of the Verifications Departments notify their shipping agent clients about the occurrence of an inspection, and assist the appointed inspectors during the inspection. At the end of the inspection, the Verifications Department informs the shipping agents about the results and details of the inspection. Except for seal checking and scanner inspections, it is known that the inspection process carried out by designated inspection agencies requires opening the containers, possibly moving and/or opening the items, and taking samples. When all operations are completed, the items are re-positioned and re-closed with tape indicating that they have been opened by an inspection agency. When it is known that potentially harmful items are inside some containers, the intervention of skilled personnel, **e.g.** a port chemist, will be called for, who may request the adoption of safety measures prior to the actual inspection or visit. Usually the areas used for inspection purposes will vary according to the nature of the goods or the type of operation to be carried out. A visit or inspection generally involves the following activities: breaking the seal; opening the container; moving the items; opening the items; closing the items; re-introducing the goods in the container; closing the container; affixing a new seal. Moreover, depending on the nature of the inspection and of the goods to be inspected, different types of inspection may be carried out, e.g. total or partial unloading, radiographic scanning, random checks, etc.

Services companies ensure that the rights of their customers, **i.e.** the shipping agents, are observed during the delicate phase of cargo inspection. At the same time, for shipping agents it is of primary importance to be immediately informed about an inspection under way, in order to be able to provide any missing documents and move the cargo as soon as it is released.

In the current state of the art, shipping agents are notified about the outcome of an inspection several hours after the conclusion of the same, because all data and contents resulting from the inspection, including reports and photographs, have to be suitably recorded and catalogued before being sent to the shipping agent involved.

In the field of mercantile ports, the need is commonly felt for making the existing information management processes more efficient, particularly those relating to cargo inspections.

It is known from the patent application WO2014152670A2 systems and methods for facilitating loading shipments and/or monitoring shipments while in transit.

It is also known from the patent application CN103544583A a container loading and unpacking forensics system based on mobile intelligent terminal and network technology. The system is composed of a mobile intelligent terminal and a network server, and the mobile intelligent terminal is mainly used for forensic shooting and recording brief data in a container packing/unpacking process. The network server is mainly used to store data sent by the mobile intelligent terminal, process the data, and generate and send the corresponding electronic message to the relevant departments of the government (the General Administration of Customs, the General Administration of Quality Supervision, Inspection and Quarantine, the Maritime Safety Administration, and the Border Police).

Furthermore, it is known from the patent application EP2725529A1 an on-line system and method for buyers and sellers of international container transportation services is disclosed. The system offers importing and exporting customers the opportunity to request and select specific service patterns offered by participating carriers in the booking of full container shipments. The system includes user interfaces that allow a shipper to track and trace containers across multiple carriers and an event notifications system, which notifies the user when an event has or has not occurred.

The present invention aims at solving these and other technical problems suffered by the prior art by providing an inspection system that brings about significant improvements, compared with the systems currently being used in mercantile ports, by digitalizing procedures and workflows, particularly those for attending container inspections or visits.

This innovative method of cargo inspection is carried out digitally, integrating various automatic analysis and notification functions, and offers the personnel, or users, and the clients, or shipping agents, simple and effective tools for managing information and contents, in addition to tracking the inspection progress in real time and making historical data available for consultation.

One aspect of the present invention concerns a system for inspecting goods in mercantile ports having the features set out in claim 1.

A further aspect of the present invention concerns a method for inspecting goods having the features set out in the appended claim 10.

Auxiliary features of the system and method are comprised in respective dependent claims.

The features and advantages of the system and method will become clear and apparent in light of the following description of several possible embodiments and implementations thereof, provided herein by way of non-limiting example, as well as from the annexed drawings, wherein:
- Figure 1 schematically shows the system for inspecting goods in a mercantile port and some aspects of the inspection method according to the present invention;
- Figure 2 schematically shows the devices comprised in the system for inspecting goods, and the interaction among them;
- Figure 3 shows an exemplary, but non-limiting, status diagram indicating the activities that need to be carried out, in the course of a working day, using the system and method according to the present invention;
- Figures 4A, 4B and 4C show some possible different screens of an application installed in a mobile device, which screens are displayed on a display of the mobile device, in particular: Figure 4A shows a list of containers for which an inspection has been planned on a specific date; Figure 4B shows a first screen concerning a specific container subject to a specific inspection, displaying first data; Figure 4C shows a second screen concerning a specific container subject to a specific inspection, displaying second data;
- Figures 5A and 5B show some possible screens that may be displayed on a web site or web portal through which the clients, or shipping agents, can gain access to information about inspections and/or enter information useful for the proper execution of an inspection, in particular: Figure 5A shows a list of containers for which an inspection has been planned, with a status indication; Figure 5B shows the data of a completed inspection, which data are also visible through the application in the mobile device.

With reference to the above-listed figures, reference numeral 1 identifies an automated system for inspecting goods contained in containers "C" located at mercantile ports or terminals "T", where a plurality of containers "C" have been positioned awaiting shipment. System 1 according to the present invention comprises: an electronic mail server 21, adapted to receive and send e-mails "E"; at least one application server 22, in which a plurality of applications (221, 222, 223, 224) are suitably saved and run; and at least one content origin server 23, adapted to store a plurality of contents and data.

Said system 1 further comprises at least one gateway server 24, adapted to interconnect one or more networks 4 to which said servers (21, 22, 23) can be connected; and a plurality of mobile devices "M".

Each one of mobile devices "M" has installed therein, in particular in a non-volatile memory thereof, an application "A". Said application "A" is adapted to connect to servers (21, 22, 23, 24) via at least one network 4.

Furthermore, each mobile device "M" comprises a camera, a display, and one or more writing tools.

Said application "A" is adapted to co-operate with said servers (21, 22, 23, 24) to allow displaying at least one content or one datum, receiving input from a user "U", and sending the input of user "U" to servers (21, 22, 23, 24).

In system 1 according to the present invention, said application server 22 is adapted to support a web portal "W".

Each shipping agent "S", holder of one or more containers "C", can gain access to said web portal "W", e.g. by means of a computer or a smart device. Said web portal "W" allows each shipping agent "S" to log into said web portal "W" in order to: file requests for provision of one or more containers "C" for which shipping agent "S" has received an inspection request from an inspection agency "I"; and display information about inspections already carried out and/or still to be carried out on containers "C", in particular on those containers "C" for which shipping agent "S" has filed a provision request. Moreover, said web portal "W" allows each shipping agent "S" to consult information associated with each inspection, and any updates thereof.

Said web portal "W" is remotely accessible, ensuring integration among mobile and fixed systems internal or external to system 1, in particular between users "U" and shipping agents "S". The interface is designed to be both intuitive and functional for both a user "U" and a shipping agent "S".

Said application server 22 comprises a first application 221, in particular stored and run in said application server 22. Said first application 221 is adapted to manage the provision requests received, through said web portal "W", from one or more shipping agents "S". Said first application 221 is adapted to send the provision requests received through said web portal "W" to the proprietor of a terminal "T", in order to allow the proprietor of terminal "T" to prepare containers "C" for inspection. Preferably, said first application 221 is adapted to extract the identification data of each container "C" for which shipping agent "S" has filed a provision request via said web portal "W".

In system 1 according to the present invention, said application server 22 comprises a second application 222, in particular stored and run in said application server 22. Said second application 222 is adapted to process e-mails received from said proprietor of terminal "T", each one of such e-mails having attached, for example, a file in Excel format, or the like, containing a list of containers "C" which the proprietor of terminal "T" can prepare for inspection on a specific date.

In particular, said second application 222 is adapted to extrapolate extract the identification data of each container "C" that will be prepared for inspection by said proprietor of terminal "T". Furthermore, said second application 222 is adapted to digitally register a delegation assignment "D1", through which an inspection agency "I" provides information about inspector "I1" assigned to each container "C" to be inspected.

In addition, said second application 222 is adapted to cross-check the identification data of each container "C" with other data, the latter being supplied by an external server "O", making them available to said system 1.

In system 1 according to the present invention, said application server 22 comprises a third application 223, in particular stored and run in said application server 22. Said third application 223 is adapted to group, in real time, the information and the contents generated during an inspection of a container "C". Said third application 223 is adapted to create, integrate and update an inspection report document "D2" in electronic format, which contains information and contents relating to an inspection carried out on a container "C".

In system 1 according to the present invention, said application "A" is adapted to acquire and/or generate, through mobile device "M", information and contents during the inspection of each individual container "C".

In system 1 according to the present invention, said application server 22 further comprises a fourth application 224, in particular stored and run in said application server 22. Said fourth application 224 is adapted to create notifications, e.g. notification e-mails "E" or notification communications, adapted to be transmitted, preferably automatically, e.g. via electronic mail server 21 or machine-to-machine communication, to shipping agents "S". Said notifications contain information, contents and/or updates relating to the data processed by system 1 according to the present invention, including, for example, delegation assignment registration "D1" and/or inspection report document "D2", in electronic format.

In system 1 according to the present invention, said application "A" is adapted to display, integrate and update the information and/or the contents relating to said delegation assignment registration "D1" and said inspection report document "D2".

In system 1 according to the present invention, the information and/or the contents contained in said delegation assignment registration "D1" and in said inspection report document "D2" can be viewed and updated in real time on said web portal "W".

System 1 according to the present invention makes it possible to automate the operations that need to be carried out in order to allow the inspection of goods contained in containers "C" located at mercantile ports or terminals "T", particularly maritime ports. Moreover, system 1 according to the present invention makes it possible to digitalize the contents and the information necessary to carry out the inspection, both during a preparatory phase and during a subsequent reporting phase of the inspection process. The present invention reduces the time necessary for completing an inspection, from the request for provision of a container "C" filed by a shipping agent "S" up to the conclusion of the inspection, resulting in containers "C" leaving sooner mercantile port or terminal "T".

For the purposes of the present description, the proprietor of a terminal "T" is the manager of the mercantile port or terminal "T", responsible for the logistic activities in such mercantile port or terminal "T". Said mercantile port or terminal "T" may be either maritime or terrestrial.

For the purposes of the present description, the term inspection agency "I" refers to the body that requests the inspection of the goods contained in a container "C". Said inspection agency "I" may be one or more of the following: Monopoly and Customs Agency, Tax Police, Ministry of Health, e.g. Maritime Health Agency, veterinarians, and/or other bodies entrusted with inspecting one or more types of cargo in transit through mercantile port "T".

For the purposes of the present description, the term shipping agent "S" refers to that entity which is the holder of, or is responsible for, one or more containers "C" in transit through said mercantile port or terminal "T", wherein each container "C" contains goods and has been temporarily located at the mercantile port "T".

For the purposes of the present description, the term container "C" refers, in general, to any container suitable for containing goods, which can be transported, and which can be located, at least temporarily, at a mercantile port "T", e.g. a shipping container.

For the purposes of the present description, the term user "U" refers to the operator performing the function of supervising the visit or inspection of container "C" and assisting inspector "I1" assigned to each container "C" to be inspected. More generally, user "U" is commonly referred to as "checker", and attends the inspection of containers "C", carried out by inspector "I1" appointed by the competent inspection agency, such as the Monopoly and Customs Agency, the Tax Police, the Ministry of Health, etc., on behalf of shipping agent "S", to whom he will then report. The user or checker "U" performs the functions of: supervising the inspection or visit; coordinating the inspection team; providing any documentation requested by inspector "I1" from inspection agency "I" that has requested the inspection of the goods contained in a container "C".

A shipping agent "S" needs to file requests for provision of any container "C" of his competence that may be selected for inspection by an inspection agency "I". System 1 according to the present invention allows shipping agent "S" to file such requests through said web portal "W", to which shipping agent "S" can connect in order to enter provision requests.

Said web portal "W" allows shipping agents "S" to file requests for provision of containers "C". System 1 according to the present invention provides functions allowing remote interaction for managing the data of the provision requests. By way of example, on a page of web portal "W" shipping agent "S" can enter, e.g. into a suitable form, the data of container "C" and of inspection agency "I" that has requested the inspection of container "C".

Once shipping agent "S" has completed the filing of the provision requests for every container "C", system 1, and particularly first application 221, will manage such provision requests received through said web portal "W" and will send them to the proprietor of terminal "T". System 1 according to the present invention allows for automatic digital acquisition and forwarding of the requests, thus allowing the proprietor of terminal "T" to arrange the transfer of containers "C" so that they can be inspected.

The provision requests can be forwarded to the proprietor of terminal "T" by e-mails sent through the electronic mail server 21, or by interfacing with a management system of mercantile port "T" via a specific application, e.g. stored and run in said application server 22.

The proprietor of terminal "T" will thus receive at least the identification data of each container "C" for which a provision request has been filed, and, preferably, the inspection type. Upon receiving said provision requests, the proprietor of terminal "T" can arrange the transfer of containers "C" to an inspection place. More generally, depending on terminal "T" involved and the type of inspection to be carried out on a container **"C",** the latter may have to be moved to an inspection place within specific time windows only; for example, some containers are transferred within mercantile ports in non-working hours only, **e.g.** from 01:00 to 07:30, or in the morning only, **e.g.** between 8:30 and 12:00, so that the container will be ready for an inspection to be conducted in the afternoon or for a scanner inspection.

Furthermore, inspections may be carried out in different inspection places, which may be specially assigned areas in terminal or port "T" or in the vicinity thereof, or directly in storage areas, e.g. in port areas of maritime terminals.

The choice of the inspection place will depend on the characteristics of container "C" and of the cargo contained therein, **e.g.** refrigerated cells and/or containers containing dangerous goods, **e.g.** maritime dangerous goods, called IMO, and on the stop time, e.g. export-bound containers, transhipments, etc., and/or on the inspection type, etc.

After having received the provision requests, the proprietor of terminal "T" will process them internally and then sends e.g. every day within a specific time, an e-mail with a list of containers "C" that will be transferred to one or more inspection areas on a predetermined date, e.g. on the very same day or on the next day.

In a preferred embodiment, described herein merely as a non-limiting example, said electronic mail server 21 of system 1 according to the present invention is at least adapted to receive e-mails from a proprietor of a terminal "T" where a plurality of containers "C" are located awaiting shipment. More generally, each e-mail "E" received from said proprietor of a terminal "T" comprises a list of containers "C" which will have to be inspected by an inspection agency "I", and for which the proprietor of terminal "T" guarantees availability for inspection, particularly in one or more inspection places.

Said second application 222 is adapted to process said e-mail received from said proprietor of terminal "T", in particular said second application 222 is adapted to extract from said e-mail, e.g. from an attachment in Excel format or the like of said e-mail, the identification data of each container "C" that will be made available by said proprietor of terminal "T" to allow the inspection to take place. The order, format and/or display layout of the identification data of each container "C", sent by e-mail from the proprietor of terminal "T", may be, in fact, different from those of the data transmitted, via said first application 221, along with the provision requests.

System 1 according to the present invention ensures that the data of the provision requests and of the associated replies from the proprietor of terminal "T" will be properly recorded and updated, while making such data available for consultation. In particular, the data are stored in said content origin server 23, and can be retrieved by the other servers (21, 22, 24), by applications (221, 222, 223, 224), and by application "A" as needed.

In a preferred embodiment, described herein by way of non-limiting example, said second application 222 is also adapted to create, integrate and update a transport order "Tr", in electronic format, through which the movements of each individual container "C" are tracked.

In the same embodiment, said notification created by said fourth application 224 of system 1 contains information, contents and/or updates relating to the data processed by system 1 for the inspections, including, according to the present invention, transport order "Tr".

In the same embodiment of system 1 according to the present invention, said application "A" is adapted to display, integrate and update the information and/or the contents of transport order "Tr".

System 1 according to the present invention allows the information and/or contents of the electronic documents and/or records, including said transport order "Tr", to be viewed and updated in real time, e.g. on said web portal "W".

In system 1 according to a preferred embodiment, described herein by way of non-limiting example, all information, data and/or contents included in delegation assignment registration "D1", in inspection report document "D2", and/or in transport order "Tr" are verified and, if necessary, constantly updated at regular intervals of, for example, one minute, five minutes or ten minutes, so that, once such time has elapsed, any variations occurred and/or detected by system 1 will be visible on said web portal "W" and/or said application "A".

Preferably, said second application 222 is adapted to create a transport order "Tr" in electronic format, through which the movements of each individual container "C" are tracked, and also to register delegation assignment "D1" in electronic format, through which an inspection agency "I" informs about inspector "I1" appointed for the inspection of each container "C".

In one possible embodiment, said delegation assignment registration "D1" and said transport order "Tr" can be updated manually, e.g. through web portal "W" and/or said application "A".

Said second application 222 is also adapted to cross-check the identification data of each container "C" with other data, the latter being supplied by an external server "O", making them available to system 1.

In one possible, but merely illustrative and non-limiting, embodiment of system 1 according to the present invention, said delegation assignment registration "D1" and/or said transport order "Tr" comprise information or data about the commercial class, cargo type and seal associated with container "C". Preferably, such information or data can be retrieved automatically from an external server "O". Said external server "O" is, for example, a computer platform storing information about containers "C" located at one or more mercantile ports "T", e.g. maritime ports, such as, for example, the Port Community System APNet.

More generally, said external server "O" stores at least the identification number of container "C"; the commercial class (Import, Export or Transhipment); the current seal of container "C"; the type of cargo, etc., for each container "C" that is present in a mercantile port.

Said external server "O" is an independent server not belonging to system 1 according to the present invention, and autonomously managed by third parties.

In a preferred embodiment of system 1, said second application 222 running in said application server 22 is adapted to extract the list of containers "C" from every e-mail "E" received from said proprietor of a terminal "T", and to retrieve the identification data of each container "C", cross-checking the identification data of each container "C" with other data, the latter being supplied by said external server "O". Preferably, the identification data of each container "C" supplied by said external server "O" are stored in said content origin server 23. The present invention makes available, just a few minutes after the reception of the e-mail from the proprietor of terminal "T", all the data necessary for handling the inspection; with the procedures currently in use, such data would only be available at the end of the delegation phase, i.e. when inspection agency "I" communicates the names of rinspectors "I1".

Preferably, said second application 222 is adapted to execute an automatic analysis of e-mail "E" received from the proprietor of terminal "T", in order to extract the data contained therein and store them into said content origin server 23. The present invention makes it possible to immediately attain a remarkable result, in that it permits automating the subsequent activities, i.e.: creating lists of containers "C" for which an inspection has been planned, e.g. subdivided by responsible shipping agent "S"; and notifying such lists, e.g. by sending to each shipping agent "S" the list of containers "C" of their competence which will be subjected to inspection on a given day, and/or by sharing such information on web portal "W". The modes of automatic e-mail analysis, e.g. analysing the text of an e-mail and/or of a file attached thereto, will not described any further herein, since they are per se known to a person skilled in the art.

In a preferred embodiment of system 1 according to the present invention, said transport order "Tr" is created on the basis of the list of containers "C" to be transferred, received from the proprietor of terminal "T". Said transport order "Tr" ensures that transfers will occur in controlled customs inspection corridor mode from terminal "T" to the inspection place.

Preferably, for each container "C" to be transferred, a separate transport order "Tr" is generated in digital format.

Transport orders "Tr" are also uploaded to a public satellite tracking platform, which is external to, and independent of, system 1 according to the present invention. Preferably, said uploading of transport order "Tr" to said satellite tracking platform is effected through an application comprised in system 1, e.g. suitably stored and run in said application server 22, which will not be described in detail herein. Preferably, transport order "Tr" can also be uploaded to said satellite tracking platform from said web portal "W". Preferably, system 1 according to the present invention can communicate with one or more platforms, e.g. the Uirnet platform of the Ministry of Infrastructure and Transport and/or the TFP platform of the Port System Authority of the Eastern Ligurian Sea. Said connection is established by means of said application of system 1, e.g. suitably stored and run in said application server 22.

Preferably, individual transport orders "Tr" created by said second application 222 will be visible on a specially developed application, which is not a subject of the present invention, stored in the memory of a smartphone being used by drivers or transporters in charge of moving the containers to the inspection places. Preferably, upon loading container "C" onto the means of transport to be used for moving container "C" to the inspection place, the driver or transporter will use said specially developed application, not covered by the present invention, in order to select loaded container "C" and start the mission of transferring container "C".

System 1 according to the present invention, particularly said second application 222, is adapted to update said transport order "Tr", e.g. by entering the datum identifying the parking space where each container "C" that has been transported to the inspection place has been unloaded.

In a preferred embodiment of system 1 according to the present invention, said second application 222 is adapted to create a list of daily inspections or visits, which will be available to user "U" on both application "A" and web portal "W". For example, based on the data and information contained in transport order "Tr", every day, e.g. at a specific time, e.g. at 07:30, said second application 222 will register and/or update delegation assignment "D1".

More generally, as already specified, said second application 222 is adapted to register a delegation assignment "D1", through which an inspection agency "I" specifies inspector "I1" assigned for an inspection of a container "C", following the reception of the e-mail from the proprietor of terminal "T".

In one possible embodiment of system 1 according to the present invention, said second application 222 allows a user "U" to manually register delegation assignment "D1" for inspections or visits. In one possible embodiment, described herein by way of non-limiting example, said second application 222 allows user "U" to manually enter inspections or visits on a dedicated page of web portal "W". Preferably, when inspections or visits are entered manually by a user "U", the latter can register delegation assignment "D1" for containers "C" which may contain special or dangerous goods, e.g. IMO materials or fumigants, for which the inspection procedure may be more complex and may require the presence of other operators in addition to users "U" and inspectors "11". For example, for containers "C" identified as containing IMO materials or fumigants, user "U" will request, e.g. by e-mail, procedure instructions to a safety office of terminal "T" involved, and then, once received, will forward such instructions to a responsible employee of the skilled labour provider, so that they can activate the safety procedures necessary to ensure a correct handling of containers "C" and of those goods which represent a potential risk for the public's health. Only when skilled technicians are available will it be possible to plan the inspection of such a container "C".

Once delegation assignment "D1" has been registered, the received service orders, concerning the inspections to be carried out on containers "C", will be shared out among users "U". This operation can be carried out, for example, through application "A", which permits a user "U" to take charge of an inspection.

Preferably, before performing any inspection or visit activity, those users "U" who have taken charge of service orders concerning containers "C" of the IMO and/or fumigant type will go to the inspection places, where containers "C" to be inspected have been parked, and will mark such containers, e.g. by affixing an "X", preferably using adhesive tape, to container "C", e.g. on the doors of container "C", as a reminder that such container "C" must not be opened prior to the arrival of a skilled technician, e.g. a chemist.

Said delegation assignment registration "D1" is shared with inspection agency "I" that has requested the inspection of container "C", so that the intervention of an inspector "I1" can be planned. For example, user "U" goes to the offices of inspection agency "I" and enquires about the assignment of an officer or inspector "I1" for each inspection to be carried out on a container "C".

In a preferred embodiment of system 1 according to the present invention, said delegation assignment registration "D1" comprises information about the commercial class, the type of cargo, and the seal associated with container "C".

Delegation assignment registration "D1" can be updated, for example, with information about inspection agency "I" and inspector "I1" assigned for the inspection of each container "C" by means of said second application 222, said application "A", and/or said web portal "W".

Once inspector "I1" has been identified, application "A", or a dedicated page on the web site or portal "W", will allow user "U" to update said delegation assignment registration "D1" with the name of inspector "I1" assigned for each inspection; thus, user "U" will be able to update, through application "A" or a dedicated page on the web site or portal "W", said delegation registration assignment "D1".

In addition, user "U" will also define, together with inspector "I1", the modes of execution of the inspection on each individual container "C" assigned thereto, e.g. by jointly arranging a time schedule.

Preferably, through said application "A" user "U" can update the delegation assignment registration "D1", e.g. by selecting each time a container "C" to be inspected by appointed officer or inspector "I1", and by changing its status from "Not assigned" to "Delegated", thereby indicating that an officer or inspector "I1" has been assigned for an inspection of that container "C". If no inspector "I1" has been assigned to a container "C" yet, the inspection will remain in "Not assigned" status until an inspector "I1" is assigned, e.g. on the next day.

More generally, said users "U" must wait for inspection agency "I" to communicate the delegation assignments to officers or inspectors "I1". The present invention makes it possible to mark an inspection of a container "C" as "delegated" by means of said application "A". In this way, delegation assignment "D1" can be registered immediately, so that shipping agents "S" can be notified right away, via remote communication, that the delegation has been assigned and that, therefore, container "C" will be inspected on that day, except force majeure. In particular, shipping agents "S" can come to know about this variation through said web portal "W" and/or by notification, e.g. a notification e-mail "E" created by means of said fourth application 224 comprised in said application server 22. More generally, said electronic mail server 21 is adapted to send e-mails to shipping agents "S".

Describing now in more detail the features of system 1 according to the present invention, said electronic mail server 21 is at least adapted to send, preferably in an automatic manner, e-mails to shipping agents "S" who are the holders of containers "C". Moreover, said electronic mail server 21 is at least adapted to receive e-mails from said proprietor of terminal "T" and also, if necessary, to send e-mails to said proprietor of terminal "T". The detailed characteristics of said electronic mail server 21 will not be described any further herein, since they are per se known to a person skilled in the art.

Said at least one gateway server 24 is adapted to interconnect one or more networks 4 to which said servers (21, 22, 23) can be connected. The present solution makes system 1 ductile, allowing for simple and quick integration of new or different functions, so that different networks 4, to which different systems and/or devices are connected, can interact with each other. The detailed characteristics of said gateway server 24 will not be described any further herein, since they are per se known to a person skilled in the art.

For the purposes of the present description, the term networks 4 refers to a communication network, e.g. a network of devices including: servers (20, 22, 24), fixed devices, mobile devices "M", etc., which can communicate with each other in accordance with one or more communication protocols, e.g. standardized communication protocols. Said networks 4 are, for example, WiFi networks and/or wired networks capable of connecting to the Internet, e.g. at least in accordance with the 4G and newer protocols.

Said mobile device "M" is, for example, a smartphone and/or a tablet, which is equipped with at least a camera, a display, and writing tools. In particular, said mobile device "M" is preferably a touchscreen device provided with a camera, which can perform a data-entry function. Preferably, said mobile device "M" supports Internet connectivity in accordance with the 4G and newer, e.g. 5G, standards, in order to be able to transmit the acquired data and contents in real time, which will then be suitably stored to allow the automatic applications to process and re-organize them.

Preferably, said mobile device "M" is equipped with a writing tool consisting of a touchscreen pen, to facilitate the entry of data and information even during the winter, when operators or users "U" working outdoors may have to use gloves to protect themselves against the cold, so that said mobile device "M", and hence application "A", can be used easily in any environmental and weather condition.

Said application "A", which is installed in every mobile device "M", co-operates with said servers (21-24) to allow displaying at least one content, receiving input from user "U", and sending the input of user "U" to servers (21-24).

In a preferred, but merely illustrative and non-limiting, embodiment of system 1 according to the present invention, said inspection report "D2" is adapted to contain information about each container "C" to be inspected. Said information about each container "C" includes at least the following data: container's identification number "C"; shipping agent's identifier "S"; inspection type; inspector's name "I1"; inspection area or place; commercial class, e.g. import, export or transhipment traffic; seal number before opening container "C"; new seal number affixed at the end of the inspection upon closing container "C". Such information is, for example, at least partly retrieved from said external server "O", preferably through said second application 222, as previously specified herein.

In addition, said inspection report "D2" is also adapted to comprise contents. Preferably, said contents include at least the following: at least one photograph of container "C"; at least one photograph of the seal before opening container "C"; at least one photograph of the goods contained in container "C" after opening container "C"; at least one photograph of the goods inside container "C" after the goods moved for inspection have been re-introduced; at least one photograph of the new seal affixed to container "C" at the end of the inspection procedure.

Such information and contents are in electronic format, thus defining said inspection report "D2" in electronic format, and can be easily consulted, whether through said web portal "W" or through said application "A".

More generally, in the system according to the present invention the information and contents created and acquired, through said application "A", during an inspection of a container "C" are: acquiring images; creating text contents; and/or receiving inputs from said user "U".

In a preferred embodiment of system 1 according to the present invention, said inspection report "D2" further comprises a copy of the receipt issued by inspector "I1", in particular issued at the end of an inspection, which copy is acquired as a photograph by means of said mobile device "M".

Said contents are transmitted to said servers (21, 22, 23, 24) to be saved and processed. In particular, data and contents are suitably stored into said content origin server 23 and can be retrieved by the other servers (21, 22, 24), by applications (221, 222, 223, 224), and by application "A" as necessary.

In a preferred embodiment of system 1 according to the present invention, said third application 223, which is adapted to collect, in real time, information and contents generated during the inspection of each individual container "C", is adapted to group, in real time, the information and the contents obtained through said application "A", thereby creating and updating an inspection report document "D2" in electronic format.

In particular, said application "A" is adapted to acquire and enter the following information and contents generated during the inspection: verification of the seal without breaking it; verification of whether a basic inspection or visit has been carried out, during which container "C" has been opened without moving the goods contained therein; verification and indication of the number of opened and moved items; indication of the nature of the items, e.g. pallets, cartons, boxes, cages, etc.; indication of whether a skilled technician, e.g. a chemist, has intervened; indication of whether a lift truck has been used for moving big or large items; verification of whether any dangerous goods have been identified and whether they have been notified beforehand; indication of whether the officer has requested container "C" to be left available for further inspection; verification and indication of the number of the new seal affixed to re-closed container "C".

During the inspection, user "U" will, in addition to entering the above-listed information into one or more dedicated forms visible on the display of mobile device "M", use said application "A" to generate contents, in particular to acquire photographs to be added to the above-listed information and to be included in inspection report "D2".

In one possible, but merely illustrative and non-limiting, embodiment of system 1 according to the present invention, the information and contents acquired during the inspection of a container "C", or at least part thereof, can be entered manually at a later time, e.g. through said web portal "W", should any technical problems arise which may prevent said application "A" and/or mobile device "M" from operating properly, e.g. when computer services and/or network 4 are down, or when the battery of mobile device "M" is dead, etc.

In the preferred embodiment of system 1 according to the present invention, during an inspection of a container "C" said application "A" is adapted to create contents including at least: acquiring images; creating text contents; and receiving inputs from said user "U". Preferably, said contents are at least: a photograph of the original seal, sealing container "C" before the latter is opened to inspect the goods; a photograph of closed container "C", clearly showing the number of container "C"; a photograph of the condition of the goods inside the container immediately after opening it; a photograph of the condition of the goods inside container "C" after any items have been moved; a photograph of the goods inside container "C" after the moved items have been re-introduced; and a photograph of the new seal affixed to the container at the end of the inspection. Such contents are also saved into content origin server 23.

In general, said documents, registrations and orders (D1, D2, Tr) can be displayed in different modes, e.g. on screens that may differ between application "A" and web portal "W", and/or in different formats, e.g. PDF, Excel etc., and/or as different files, which are then available for consultation, and which contain all the same data, information and contents whatever the display mode actually used by a viewer and/or the format in which they have been stored in one or more servers.

In general, when a container "C" is to be inspected, at the appointed time the user goes together with officer or inspector "I1" to the inspection place, preferably after having the labour provider assign a team of people entrusted with opening container "C" and handling the items. For each container "C" to be inspected, user "U" must access the inspection management screen in application "A" installed in mobile device "M". Before the appointed officer begins the inspection of the goods and before opening container "C", through application "A" user "U" changes the inspection status from "Delegated" to "In progress". Also, user "U" verifies that the number of the seal of container "C" matches the one extrapolated extracted by system 1, e.g. the one shown in delegation assignment registration "D1", entering it into the dedicated inspection management screen of application "A" and taking photographs that will be saved into content origin server 23.

User "U" coordinates and instructs the skilled workers to have the goods inspected as specified by officer or inspector "I1" from inspection agency "I" and without damaging the goods. User "U" will then record on the various screens of application "A" any further information that may be required, including any other photographs that may be deemed to be useful.

During the inspection, depending on the nature and number of moved items, user "U" will tick specific check boxes according to the information acquired, e.g. inspection time and date, inspection place or area, handling mode, number of moved items, unloading mode, and other inspection-related notes, e.g. seal check, inspection or visit type (with or without unloading), etc.

Through the same application "A", and particularly on the same screen, user "U" can declare the inspection to be completed as soon as it ends. In particular, user "U" can change the inspection status from "In progress" to "Completed".

More generally, should an inspection in "Delegated" status not be inspected on the set date, e.g. due to various problems, that inspection will remain in the "Delegated" status awaiting inspection, which will be carried out, for example, on later days.

In the course of the inspection, said third application 223 will group, in real time, the information, data and contents generated during the inspection of each individual container "C", acquired through said application "A", thereby creating and integrating in real time said inspection report document "D2" in electronic format.

More generally, should any problems arise which will take a significant time to be overcome, and should officer or inspector "I1" decide to inspect other containers "C", user "U" will be able to, on the specific inspection management screen generated by application "A", set the inspection into a "Suspended" status and then proceed with other inspections, to return then to managing the suspended inspection once the problems have been solved.

More generally, said application "A" requires entering, whether automatically or manually, the following information and contents, so that it can register them into system 1 in order to create, and later integrate and update, inspection report document "D2": inspection type, indicating whether a partial or total unloading of container "C" is envisaged; inspection agency that requested the inspection, e.g. Customs, Tax Police, etc.; name of shipping agent "S" on behalf of whom the user is attending the inspection; name of officer or inspector "I1" assigned for the inspection; identification number of container "C", seal number before opening container "C"; information about item handling; correct execution of the item handling operations, in order to avoid damaging the goods; number of the new seal affixed at the end of the visit when container "C" is re-closed; inspection place and date; signature of user "U" attending the visit; notes about photographs, damages, sampling, reports to the shipping agent, problems of various nature, etc.

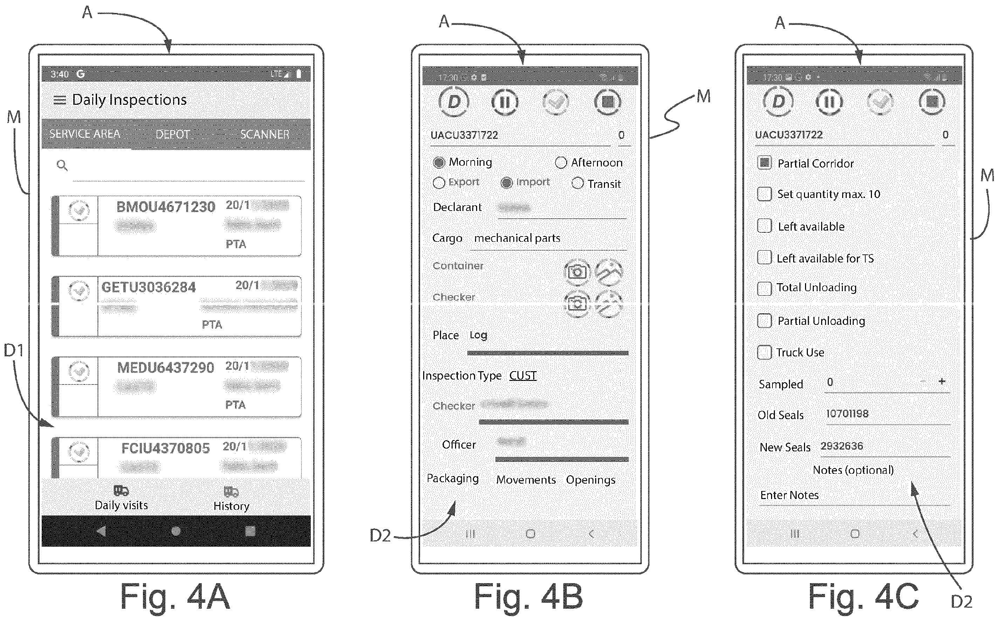

By way of non-limiting example, Figures 4A, 4B and 4C show different possible screens of application "A" installed in a mobile device "M" consisting of a smartphone, which screens can be displayed on a display of mobile device "M". In particular, Figure 4A shows a list of containers for which an inspection has been planned on a specific date. This screen shows the essential data included in delegation assignment registration "D1". It shows, in fact, the inspections to be carried out on a given day, along with their status. Each container "C" is identified by an identification number. The other data have been greyed out for privacy reasons.

The figure shows a list of the inspections planned to occur in a given inspection place, e.g. a large service area, a depot or a scanner. All listed inspections are marked with an identification mark indicating the "Completed" status. In this figure one can also see that it is possible to consult the history of completed inspections.

Figure 4B represents a first screen concerning a specific container "C" subjected to a specific inspection, which screen shows first data. This screen shows first data included in inspection report document "D2".

In Figure 4B one can see the identification number of a container "C" at the top, and an indication as to when the inspection was carried out. The figure indicates that the inspection took place in the morning. The figure also shows some data and information pertaining to the shipping agent "S", or declarant, and to the type of goods in the container "C", which in this case are mechanical parts. In figure 4B one can also see that, for a specific container "C", it is possible to load existing photographs or contents, e.g. stored in the content origin server 23.

The figure also shows further data relating to the inspection place, the inspection type, user or checker "U", inspector or officer "I1", etc.

Figure 4C shows a second screen concerning a specific container "C" subjected to a specific inspection, which screen contains second data. This screen shows second data included in inspection report document "D2". This screen indicates, in fact, that the inspection was conducted by creating a partial corridor between the items in container "C" and that no items were sampled, along with the numbers of the old seal, prior to the inspection, and of the new seal, affixed at the end of the inspection.

In general, if any labels identifying dangerous products, e.g. IMO or fumigant labels, are found by user "U" during an inspection, or the presence of such dangerous products is detected without such presence having been signalled by shipping agent "S" beforehand, then user "U", acting as an intermediary, will notify the shipping agent and will request the intervention of skilled personnel, e.g. a chemist.

During an inspection, user "U" must also verify the integrity and compliance of the goods or items after container "C" has been opened. Should the items be non-compliant or visibly damaged, e.g. humidity, damaged goods, open cartons, etc., then user "U" will contact shipping agent "S", the latter being the mandator/declarant, requiring their intervention for any disputes that may arise.

Furthermore, should any anomalies or problems arise in relation to the verification or inspection, then user "U" shall, not being allowed to settle the controversy on his/her own, contact shipping agent "S", requiring the latter to intervene in the dispute.

In all of the above-listed cases that may occur during an inspection, user "U" is entitled to update the inspection status to "Suspended" until all problems are solved.

In addition, if officer or inspector "I1" from inspection agency "I" decides to leave container "C" available for a subsequent opening thereof without requesting a different type of visit, then the inspection will have to be considered as not completed. In such a case, after affixing the new seal to container "C" and recording it through said application "A", user "U" will, still by means of said application "A", set the inspection into the "Suspended" status with no "left available" indication. Thus, system 1 according to the present invention will propose the inspection again among those planned, for example, on the next day. During the subsequent opening, or during every subsequent opening, user "U" will have to increment, in application "A", the number of times that container "C" has been opened.

In addition, if officer or inspector "I1" of inspection agency "I" is not satisfied with the results of the type of inspection carried out, he/she will request that container "C" be left available for an additional inspection, different from the one already made. In such a case, shipping agent "S" will have to enter, through web portal "W", a new provision request in order to re-activate the inspection cycle management procedure, because container "C" has been left available for further inspection.

In the preferred embodiment of system 1 according to the present invention, said application server 22 comprises a fourth application 224, which is adapted to create notifications, e.g. e-mails "E", to be sent, e.g. automatically, through electronic mail server 21 to shipping agents "S" and/or to management systems of said shipping agents. Said notifications to be sent to shipping agents "S" contain data, information, contents and updates relating to the inspection data processed by system 1, including: delegation assignment "D1"; inspection report "D2"; and/or said transport order "Tr". Preferably, said notifications will be sent to shipping agents "S" every time the inspection status changes.

Upon receiving such notifications, shipping agents "S" come to know that a variation has occurred, e.g. a change in the status of the inspection; moreover, such notifications allow them to analyse the information in more detail, e.g. through web portal "W".

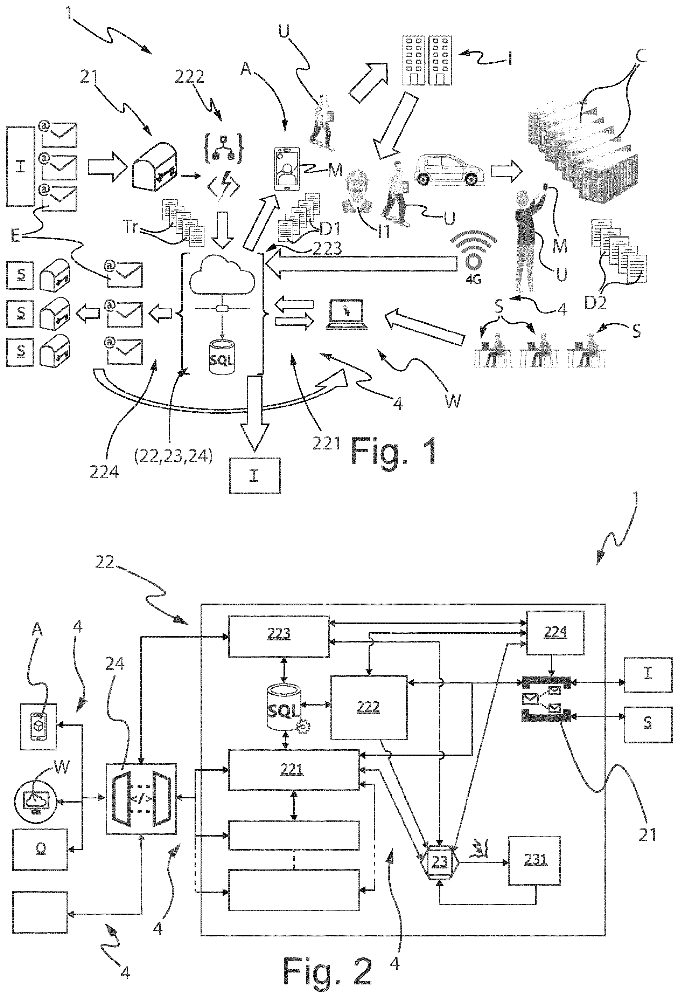

Figure 1 schematically shows system 1 for inspecting goods in a mercantile port and some aspects of the method of inspection according to the present invention. Figure 1 shows how shipping agents "S", by connecting to web portal "W", can file provision requests for each container "C" of their competence.

Once shipping agent "S" has completed the entry of provision requests for each individual container "C", said first application 221 will manage such provision requests received through said web portal "W" and will send them to the proprietor of terminal "T"; the proprietor of terminal "T" can then arrange the transfer of containers "C" so that they can be inspected.

Subsequently, e.g. on the next day, the proprietor of terminal "T" will send to the electronic mail server 21 of system 1 an e-mail with the list of containers "C" that the proprietor of terminal "T" can prepare for inspection on a specific date. Through said second application 222, the data identifying each container "C" included in the e-mail will then be extrapolated extracted, and the same second application will provide for creating a transport order "Tr" in electronic format and for making a digital registration of delegation assignment "D1. Through said application "A", stored in mobile device "M", user "U" will be able to know for which inspections a delegation will have to be obtained, and will contact inspection agencies "I" in order to obtain information about inspector "I1" assigned for the inspection of each container "C". After having obtained the name of inspector "I1", user "U" will be able to integrate delegation assignment registration "D1" with the name of inspector "I1" and change the inspection status, in particular by setting that inspection into the "Assigned" status.

Together with inspector "I1", user "U" will then go, as previously specified, to the inspection place where containers "C" to be inspected have been positioned or parked. During the inspection, user "U" will, through mobile device "M", acquire and/or generate the information and the contents required by said third application 223 to automatically create inspection report document "D2", which will be integrated and updated through said application "A" with information, data and contents generated during the inspection.

At the end of the inspection, the status thereof will be updated to "Completed".

Information, contents and documents are accessible to the shipping agents through web portal "W", which is updated substantially in real time with all variations that have occurred and with any data and/or contents acquired by system 1.

When the inspection is completed, notifications are sent to shipping agents "S", e.g. by e-mail or machine-to-machine communication, through said fourth application 224, preferably every time the inspection status changes. When such notifications are received, the shipping agents can then obtain further information, e.g. by connecting to said web portal "W".

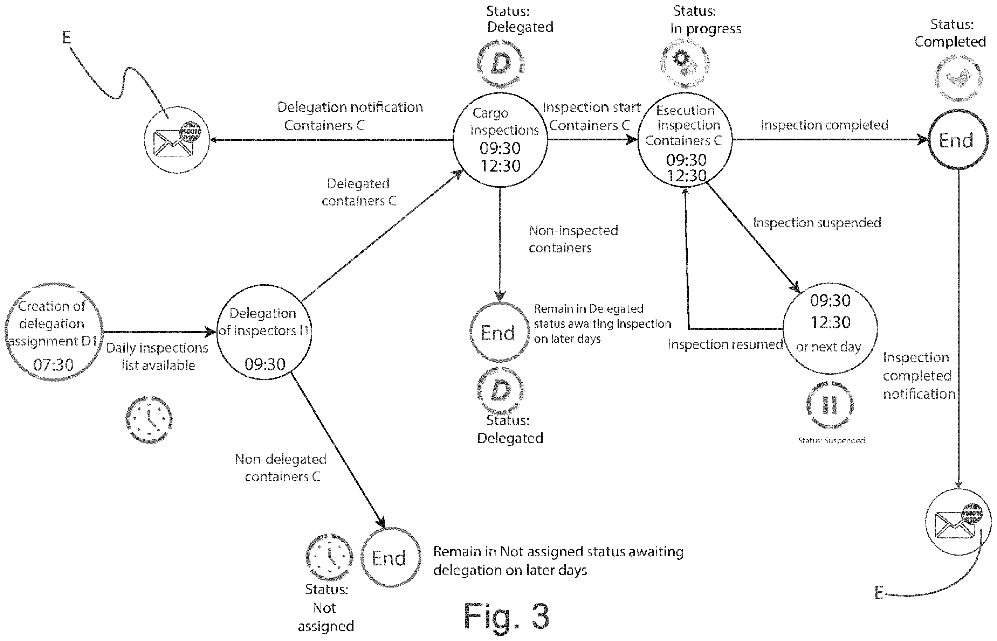

Figure 3 shows, by way of non-limiting example, a status diagram indicating the activities that need to be carried out in the course of a working day by using system 1 and the method according to the present invention. Figure 3 shows that, at a specific time, indicatively at 7:30, delegation assignment "D1" is registered by said second application 222. The figure also shows that at a second time, indicatively at 9:30, delegations are obtained, specifying the name of each inspector "I1" for the inspections to be carried out. Until then, the status of all inspections remains "Not assigned".

The inspections of those containers "C" to which an inspector "I1" has not been assigned will remain in the "Not assigned" status, and for such containers the procedure will end, awaiting delegation, e.g. on the next or a later day.

On the contrary, the inspections of those containers "C" to which an inspector "I1" has been assigned, will undergo a status change to "Delegated". Such status change implies the generation of a notification, in particular a notification e-mail "E", by said fourth application 224. Such notification, in particular an e-mail "E", will be sent to the corresponding shipping agent "S".

In the "Delegated" state, inspections can be carried out, e.g. within a predetermined time window, indicatively 9:30-12:30.

If a container "C" is not inspected within such time window, the procedure will end for such container "C", which will remain waiting for the inspection to start, e.g. on the next day.

On the contrary, when an inspection procedure is started on a container "C", the status of that inspection will be changed to "In progress".

If the inspection is completed successfully for that container, the procedure will end, and the inspection status will change to "Completed". This status change will imply the generation of a notification, in particular a notification e-mail "E", by said fourth application 224. Such notification, in particular a notification e-mail "E", will be sent to corresponding shipping agent "S".

If, on the contrary, the inspection is suspended, e.g. by inspector "I1", the inspection status will change again to "Suspended" and will remain such until the inspection is resumed, after which the inspection status will change to "In progress" again.

In the preferred embodiment of system 1 according to the present invention, said application "A" is adapted to display and update the information contained in said delegation assignment registration "D1" and/or in said inspection report document "D2" and/or in said transport order "Tr". Preferably, any updates or variations occurring in said registrations, documents and/or orders in electronic format will be notified, preferably every time an inspection status change occurs, to at least said shipping agents "S", e.g. by means of said e-mail "E" created by said fourth application 224.

System 1 according to the present invention allows the data entered by user "U" to be consulted substantially in real time through web portal "W". In fact, upon completion of an inspection, the data entered and the photographs acquired by user "U" through application "A" during the inspection are immediately made available and viewable, e.g. through said web portal "W".

In one possible embodiment of system 1 according to the present invention, said application "A" is programmed in a manner such that a user "U" can start the inspection operations on a container "C" by acquiring, through application "A" installed in mobile device "M", the data about a container "C" whereon the inspection will have to be carried out, e.g. by entering, by means of a writing tool, or by acquiring, by means of the camera, the identification number of container "C" and/or the seal number before opening container "C". In this way, user "U" will open application "A" on the very screen that will simply and easily permit starting the inspection on that container "C", since the already available data and contents will be automatically loaded by system 1 for filling in said inspection report document "D2", e.g. after having retrieved such data and contents from said content origin server 23.

In a preferred embodiment, described herein merely as a non-limiting example, system 1 comprises a fifth application 231 that permits creating at least one copy, smaller in size, of the data and contents generated during an inspection and stored in said content origin server 23. This embodiment makes it possible to obtain data and contents that can, if necessary, be quickly transmitted over network 4, and/or previews that can be rapidly displayed, e.g. through said application "A" and/or said web portal "W". Said copies are also saved into said content origin server 23.

In general, the applications comprised in system 1 according to the present invention may all be executed by a single computing device, or CPU, comprised in a single server, or else may be executed by a plurality of computing devices, or CPUs, comprised in one or more servers. Said servers may either be located all in one place or be spatially distributed, e.g. one or more of them may be located in a position remote from the others and connected thereto through a network **4.**

Moreover, the applications comprised in system 1 according to the present invention may be separate applications or, alternatively, one or more of them may be a part of a higher-level application, consisting of subroutines of such higher-level application. The architecture of such applications may vary as necessary.

In one possible, but merely illustrative and non-limiting, embodiment of system 1 according to the present invention, said application "A" comprises a local server. Said local server is realized in a portion of the memory of mobile device "M". Said local server is adapted to store contents and data whenever there is no connection to said network 4, the latter being able to put application "A" in communication with said servers (21-24). The present embodiment allows application "A" to store, at least temporarily, the data and contents relating to an inspection of one or more containers "C" into the memory of mobile device **"M".** Preferably, the data and contents relating to an inspection of one or more containers "C" remain stored in said local server until a connection to a network 4 is established. Once the connection to said network 4 has been restored, application "A" will synchronize and/or back up the data and/or contents with the other servers (21-24) of system 1 for the purpose of making all the data and/or contents that have been saved locally in single mobile device "M" available throughout system 1.

In a preferred embodiment of system 1 according to the present invention, said application server 22 further comprises one or more of the following applications: registration and login of users "U", registration and login of shipping agents "S"; data and content management interfaces on both web portal "W" and application "A"; inspection report "D2" screens; interface for filing requests for provision of containers "C", etc. Preferably, said application server 22 comprises applications adapted to generate the human-machine interface letting said users "U" and said shipping agents "S" communicate with said system 1. Such applications allow users "U" and shipping agents "S" to consult data and contents on different levels, since they have access to different system functions.

For the purposes of the present description, application "A" and the various applications mentioned and described above will not be described any further, because the different functions described herein can be implemented in many ways, and the single applications, when considered individually and separately from this specific context, will be per se known to a person skilled in the art entrusted with programming the various servers and mobile device "M".

By way of non-limiting example, system 1 according to the present invention can be created using the Agile DevOps methodology, e.g. through the use of a "Microsoft Azure DevOps" platform, implementing such system 1 by means of a "Microsoft Azure" cloud platform and using the Asp.Net Core API Rest frameworks. In particular, the present solution for the implementation of system 1 permits extensive code reuse between the part concerning web portal "W" and the part concerning application "A". "Microsoft Azure" environment can be integrated with Application Insights, a telemetry and diagnostics service which can monitor response times and errors and export reports and diagrams in a wide variety of formats. For example, the applications involved in the authentication of the various subjects have been developed on the basis of Azure Active Directory, compliant with OpenID Connect and OAuth 2.0 industrial standards.

In one possible, but merely illustrative and non-limiting, embodiment of system 1, said servers (22, 23) are, preferably, SQL and BLOB Storage relational servers, so that they can appropriately manage and store all the data and contents generated during the various phases that lead to an inspection of a container "C". In particular, SQL relational servers are preferably subdivided in such a way that each one of them will perform one of the following activity: data acquisition (CUD); data reading by web portal "W" and by application "A"; and data reading by the applications. Moreover, said BLOB Storage server is also used for storing contents, in particular photographs.

Figure 2 schematically shows the devices, comprised in system 1, that are used for conducting cargo inspections, and the interaction among such devices. In system 1 depicted in the figure, one can identify the various servers (21, 22, 23, 24) and the various applications (221, 222, 223, 224, 231) previously described herein, and understand how they interact with one another and with the other servers. It is apparent from this figure that gateway server 24 provides a connection between networks 4, where applications "A" and/or web portal "W" reside, and the servers of system 1, in particular with reference to external server "O".

Figure 2 also illustrates some non-numbered elements that represent one or more applications comprised in system 1 according to the present description and not specifically illustrated herein, and/or other servers or networks that may interface with system 1 according to the present invention, e.g. management applications adopted by shipping agents "S", and/or systems for computing and invoicing activities carried out by means of system 1 according to the present invention, etc.

In general, said web site or web portal "W" is designed to be intuitively used by users "U" and shipping agents.

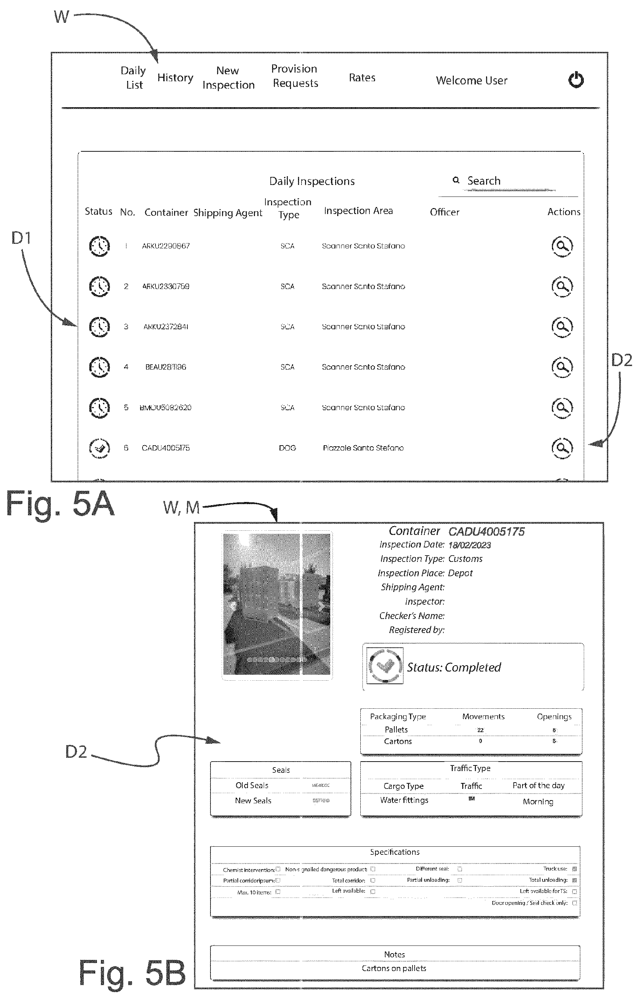

By way of non-limiting example, Figures 5A and 5B show different possible screens that can be displayed on said web site or portal "W", through which the clients or shipping agents "S" and/or said users or checkers "U" can access inspection-related information, data and/or contents, and/or enter information useful to ensure the proper execution of the inspection.

In particular: Figure 5A shows a list of containers "C" for which an inspection has been planned, along with the status thereof.

The figure shows a screen that essentially lists the data contained in the delegation assignment registration "D1", indicating a plurality of inspections of containers "C", the latter being identifiable through their identification number, the shipping agent's name, not shown for privacy reasons, the inspection type, the inspection place or area, the appointed officer or inspector "I1", and the user or checker "U" who will have to attend the inspection.

As can be seen in Figure 5A, the first five inspections are in the "To be assigned" status, while the status of the sixth one is "Completed".

In the upper part of the screen shown in Figure 5A, the functions of web portal "W" of system 1 according to the present invention are visible. Such functions include, in addition to those related to visits or inspections, a function for filing provision requests, through which shipping agents "S" can file provision requests as previously described herein.

From Figure 5A it can be deduced that, by clicking the magnifying lens symbol associated with an inspection in "Completed" status, one can view the data of inspection report document "D2".

Figure 5B shows the data relating to a completed inspection ("Completed" status), which data are also visible through application "A" installed in mobile device **"M".**

Figure 5B shows how the photographs taken by user "U" during the inspection are displayed, along with the data contained in the inspection report document "D2". Such data include: inspection date, inspection agency "I" that requested the inspection, inspection place, data of shipping agent "S", data of inspector "I1", and data of user "U". Furthermore, Figure 5A shows: type of moved and/or opened package; numbers of old and new seals; commercial class data; and other specifications that are ticked when adopted. Any notes are also shown on this screen.

More generally, said application "A" is installed in mobile devices "M", and both application "A" and mobile device "M" are used, preferably exclusively, by operators or users "U" who have to draw up said inspection report "D2". Through application "A", in fact, said mobile device "M" becomes a tool for acquiring and managing, in real time, the data and contents relating to each inspection or visit.

Preferably, system 1 for inspecting goods in mercantile ports according to the present invention is particularly suited to implement a method for inspecting goods in mercantile ports.

Said method comprises the following steps, preferably carried out in succession:
- providing a system 1 for inspecting goods in mercantile ports according to the present invention;
- monitoring web portal "W" to determine the filing, by one or more shipping agents "S", of one or more requests for provision of one or more containers "C";
- processing the provision requests received, which are grouped and forwarded to the proprietor of a terminal "T";
- monitoring incoming e-mail server 21 for reception of an e-mail from said proprietor of a terminal "T", which comprises a list of containers "C" for which the possibility of preparing containers "C" for inspection has been confirmed;
- digitally registering a delegation assignment "D1" in electronic format with the list of officers or inspectors "I1" assigned to each individual inspection by inspection agency "I";
- acquiring, through mobile device "M" in which application "A" has been installed, information and contents relating to an inspection carried out on a container "C", which information and contents are transmitted to the servers (21-24) to be readily available in system 1, thereby creating, integrating and updating inspection report document "D2";
- automatically notifying, e.g. by e-mail "E", respective shipping agents "S" about the results of each inspection carried out on each container "C", e.g. by sending said inspection report "D".

The method according to the present invention makes it possible to automate operations that are currently carried out manually through the use of paper media. The present solution provides information digitalization, so that all information can be better understood and more easily shared with third parties, thus improving the quality and reliability of the cargo inspection service.

In a preferred implementation of the method, the step of monitoring electronic mail server 21 is followed by a step of creating a transport order "Tr", in electronic format, to allow tracking the movements of container "C" within mercantile port or terminal "T".

In one possible implementation of the method according to the present invention, it comprises a step of verifying the data entered in inspection report "D2", for the purpose of identifying any data logging errors and providing assistance if requested by shipping agents "S".

The present embodiment of the method permits updating and correcting inspection-related data and contents simply and quickly, while making them readily available outside, e.g. to shipping agents "S", thereby improving the quality and reliability of the cargo inspection service.

In one embodiment of the method according to the present invention, the step of digitally registering delegation assignment "D1" is followed by a step of automatically notifying, e.g. by e-mail, respective shipping agents "S" about the assignment of a delegation for inspection of a container "C". The present embodiment makes it possible to inform shipping agent "S" about the fact that an inspection of a container "C" has been planned, thus allowing shipping agent "S" to prepare any additional documents that may be necessary to ensure that the inspection will be conducted properly.

More generally, the present invention makes it possible to digitalize and automate some aspects of the cargo inspection procedure, thereby considerably reducing the execution and verification times, so that shipping agents "S" can receive data updated in real time and supply any necessary information quickly, resulting in faster and more effective cargo inspections in mercantile ports. These innovative aspects of the present invention prove to be particularly advantageous in maritime ports.

With system 1 according to the present invention, the number of containers "C" subjected to inspection on a daily basis in a mercantile port may vary, for example, from 50 to more than 100 units. Thus, goods in transit through a mercantile port can be processed in a very short time.

As a matter of fact, the present invention makes it possible to automatically create a list of containers "C" to be inspected on a given day, in particular by automatically extracting the data contained in the e-mails, e.g. in files in Excel format or the like attached to the e-mails "E" received from the proprietor of terminal "T".

According to the present invention, only one device, particularly said mobile device "M", needs to be used during cargo inspections, which device permits, thanks to application "A", the acquisition of all information, data and contents, including photographs, which are then suitably processed, registered and stored remotely on said servers to be readily available for preparing said inspection report "D2". The present invention facilitates the task of the users "U", who are no longer compelled to use paper forms, pens and cameras. Even the paper document issued by officer or inspector "I1" can be registered into system 1 by simply taking a photograph of it.

In addition, all such information, data and contents can be consulted and used in real time, e.g. by shipping agents "S", e.g. through web portal "W".

The use of said mobile devices "M" and of application "A" eliminates the need for using digital cameras. Therefore, the combination of said mobile device "M" and application "A" is the only tool needed by user "U" to assist inspector "I1" during an inspection.

The present invention eliminates the need for using paper media, allowing for real-time integration of data, information and contents collected during the preliminary phase. By automatically making available all the data, information and contents acquired during an inspection or visit, the present invention considerably reduces the time spent in activities subsequent to the inspection, thus eliminating the need for making scans and connecting cameras to a PC, as was the case in the prior art.

The present invention also ensures preservation and consistency of the acquired data, information and contents, which are automatically stored by exploiting said content origin server 23, e.g. of the cloud typology.

During the inspections, the present invention also provides, in addition to permitting the inspection of a larger number of containers "C" on a daily basis in comparison with the prior art, the advantage of ensuring immediate availability of data and contents, and, even more importantly, the possibility of sending to shipping agents "S", remotely and in real time, information about each inspection, such as, for example, the assignment of an inspector "I1", the completion of an inspection or visit, and/or the outcome thereof.

Being highly automated and computer-based, system 1 according to the present invention also eliminates all back-office activities, which are largely needed in the prior art.

Thanks to the present invention, shipping agents "S" can, through the use of said web site or web portal "W", file requests for provision of one or more containers "C" in a simple and automated manner, in addition to being allowed to access said web portal "W" in order to view information about inspections already carried out or still to be carried out on containers "C" and to consult any associated information or updates, in particular in real time and at any time.

System 1 according to the present invention is particularly suited for the execution of all operations inherent in the data processing and transmission services that are necessary to improve the efficiency of the communication between shipping agents "S" and inspection agency "I". System 1 according to the present invention provides computer-based management of services for verifying the data processed by users "U" in compliance with safety regulations for cargo-related operations, e.g. customs operations.

The present invention is a highly digitalized solution for cargo inspection which can handle the information required for organizing, executing, reporting and accounting inspections of inbound and outbound cargo in a mercantile port, e.g. a maritime port.

The present invention is particularly suitable for use in mercantile ports, where inspections are carried out in an inspection place external to the areas of the mercantile port or terminal "T".

In general, the present invention provides a 25% reduction in the total daily time necessary for the execution of activities related to inspections of goods in containers "C", thus permitting to complete a larger number of inspection per day. The present invention reduces by 90% the use of paper media, since everything is highly automated and computerized.

The present invention makes it possible to concentrate all data-entry activities in a single tool, in particular in said application "A", which can be used in mobility conditions since it is installed in said mobile device "M". Indeed, by utilizing said mobile devices "M", preferably provided with a touchscreen and a camera, it is possible to enter data and connect to the servers in order to transmit data and contents in real time, so that the applications can then process and re-organize them.

Furthermore, through said application "A" the present invention makes it possible to concentrate all office functions, thus speeding up the procedures.

The present invention automates the preparation of the data necessary for the execution of daily activities. In addition, the present invention automates the flow of information between users "U" and shipping agents "S". Lastly, the present invention automates the saving and storage of data and contents, providing search and analysis tools through suitable applications.

The use of application "A" during the execution of an inspection has led to a 28% reduction in the time required for a single inspection, thus letting user "U" carry out further activities on the same day.

Through said applications, the invention provides automatic verification and distribution of the data and contents entered in system 1.

The present invention allows the mercantile port or terminal "T" to have a container "C" released, on average, in 5 days, thus speeding up the transit of the goods.

The present invention provides process optimization and innovation by eliminating, thanks to its computer-based, digitalized flow management, all delays incurred with the solutions according to the prior art.

The user interface of web portal "W" and of application "A" has been specifically designed on the basis of use and safety requirements, while ensuring the utmost efficiency and privacy of the information.

By exploiting automatic data storage, parsing and retrieval solutions, the present invention provides increased database reliability, minimizing the risk of human errors during transcription and saving operations.

By abandoning paper media and by managing the processes using software and digital systems, the present invention provides vertical integration between the back-office part, i.e**.** the phases that precede and follow an inspection, and the inspection execution part including the inspection reporting activities. At the same time, flow digitalization translates into shipping agents "S" being able to immediately view the status of the various operations.

The present invention considerably reduces the impact of errors caused by the prior manual management, thus providing significant improvements in the efficiency of the cargo inspection process in this respect as well.

The present invention provides simple interaction with external systems, such as the terminal or the clients' applications, permitting the transmission of notifications to multiple subjects about specific events. The present invention ensures better organization and permanent storage of all inspection-related data.

Any alternative embodiments which have not been described herein, but which can be easily inferred by a person skilled in the art in light of the technical contents of the present description, shall be considered to fall within the scope of the present invention.

**REFERENCE NUMERALS**

| | |
|---|---|
| System | 1 |
| Electronic mail server | 21 |
| Application server | 22 |
| First application | 221 |
| Second application | 222 |
| Third application | 223 |
| Fourth application | 224 |
| Content origin server | 23 |
| Fifth application | 231 |
| Gateway server | 24 |
| Network | 4 |
| Application | A |
| Container | C |
| Delegation assignment | D1 |
| Inspection report | D2 |
| E-mail | E |
| Inspection agency | I |
| Inspector | I1 |
| Mobile devices | M |
| External server | O |
| Shipping agents | S |
| Terminal | T |
| Transport order | Tr |
| User | U |
| Web site or web portal | W |

## Claims

1. Automated system (1) for inspecting goods contained in containers (C) located at mercantile ports or terminals (T), where a plurality of containers (C) have been positioned awaiting shipment;
said system (1) comprises:
- an electronic mail server (21) adapted to receive and send e-mails (E);
- at least one application server (22), in which a plurality of applications (221, 222, 223, 224) are suitably saved and run;
- at least one content origin server (23), adapted to store a plurality of contents and data;
- at least one gateway server (24), adapted to interconnect one or more networks (4) to which said servers (20, 22, 23) can be connected;
- a plurality of mobile devices (M), each one of the mobile devices (M) having installed therein an application (A) adapted to connect to the servers (21, 22, 23, 24) via at least one network (4); each mobile device (M) comprising a camera, a display, and one or more writing tools;
said application (A) being adapted to co-operate with said servers (21, 22, 23, 24) to allow displaying at least one content or one datum, receiving input from a user (U), and sending the input of the user (U) to the servers (21, 22, 23, 24);
said application server (22) being adapted to support a web portal (W);
**characterized by** every shipping agent (S), holder of one or more containers (C), can gain access to said web portal (W), e.g. by means of a computer or a smart device, in order to: file requests for provision of one or more containers (C) for which the shipping agent (S) has received an inspection request from an inspection agency (I); display information about inspections already carried out and/or still to be carried out on the containers (C), consult information associated with each inspection and any updates thereof; said application server (22) comprising a first application (221) adapted to manage the provision requests received through said web portal (W) from one or more shipping agents (S), and to send the provision requests to the proprietor of a terminal (T) to allow the proprietor of the terminal (T) to prepare the containers (C) for inspection;
said application server (22) comprising a second application (222) adapted to process at least one e-mail received from said proprietor of the terminal (T), comprising a list of the containers (C) that the proprietor of the terminal (T) can prepare for inspection on a specific date;
said second application (222) being adapted to:
- extract the identification data of each container (C) which will be prepared for inspection by said proprietor of the terminal (T);
- digitally register a delegation assignment (D1), through which an inspection agency (I) provides information about the inspector (I1) assigned to each container (C);
said second application (222) is further adapted to cross-check the identification data of each container (C) with other data, the latter being supplied by an external server (O), making them available to said system (1);
said application server (22) comprising a third application (223) adapted to group, in real time, the information and the contents generated during an inspection of a container (C), thereby creating, integrating and updating an inspection report document (D2) in electronic format, which contains the information and the contents relating to an inspection carried out on a container (C);
said application (A) is adapted to, through the mobile device (M), acquire and/or generate information and contents during the inspection of each individual container (C);
said application server (22) comprising a fourth application (224) adapted to create notifications to be transmitted, e.g. via the electronic mail server (21), to the shipping agents (S);
said notifications contain information, contents and/or updates relating to the data processed by the system (1) for the inspections, including the delegation assignment registration (D1); and/or the inspection report document (D2), in electronic format;
said application (A) being adapted to display, integrate and update the information and/or the contents relating to said delegation assignment registration (D1) and said inspection report document (D2);
the information and/or the contents contained in said delegation assignment registration (D1) and in said inspection report document (D2) can be viewed and updated in real time on said web portal (W).

2. System (1) according to claim 1, wherein said first application (221) is adapted to extract the identification data of each container (C) for which the shipping agent (S) has filed a provision request.

3. System (1) according to claim 1 or 2, wherein said second application (222) is adapted to create, integrate and update a transport order (Tr) in electronic format, through which the movements of each individual container (C) are tracked;
said notifications contain information, contents and/or updates relating to the data processed by the system (1) for the inspections, including the transport order (Tr);
the information and/or the contents contained in the transport order (Tr) can be viewed and updated in real time on said web portal (W).

4. System (1) according to claim 1, wherein said inspection report (D2) is adapted to contain information relating to each container (C) to be inspected, including at least the following pieces of information: container identification number (C); shipping agent's identifier (S); inspection type; inspector's name (I1); inspection area or place; commercial class, including, for example: import, export or transhipment traffic; seal number before opening the container (C); number of the new seal affixed at the end of the inspection when the container (C) is closed;
and at least the following contents: at least one photograph of the container (C); at least one photograph of the seal before opening the container (C); at least one photograph of the goods contained in the container after opening the container (C); at least one photograph of the goods inside the container (C) after the goods moved for inspection have been reintroduced; at least one photograph of the new seal affixed to the container (C) at the end of the inspection procedure.

5. System (1) according to claim 1 or 4, wherein the information and the contents created and acquired, through said application (A), during an inspection of a container (C) are: acquiring images; creating text contents; and/or receiving inputs from said user (U).

6. System (1) according to claim 5 or 4, wherein said inspection report (D2) comprises also a copy of the receipt issued by the inspector (I1), acquired as a photograph by means of said mobile device (M).

7. System according to claim 1, wherein said application (A) is programmed in a manner such that a user (U) can start the inspection operations on a container (C) by acquiring, through the application (A) installed in the mobile device (M), the data relating to a container (C) to be inspected.

8. System according to claim 1, wherein said application (A) comprises a local server, created in a memory portion of the mobile device (M), adapted to store the contents and the data in the absence of a connection to said network (4).

9. System according to claim 1, wherein the application (A), or a dedicated page of said web portal (W), allows the user (U) to update said delegation assignment registration (D1) with the name of the inspector (I1) assigned to each inspection.

10. Method for inspecting goods in mercantile ports;
said method comprising the following steps:
• providing a system (1) for inspecting goods in mercantile ports according to claim 1;
• monitoring the web portal (W) to determine the filing, by one or more shipping agents (S), of one or more requests for provision of one or more containers (C);
• processing the provision requests received, which are grouped and forwarded to the proprietor of a terminal (T);
• monitoring the incoming e-mail server (21) for reception of an e-mail from said proprietor of a terminal (T), which comprises a list of containers (C) for which the possibility of preparing the containers (C) for inspection is confirmed;
• digitally registering a delegation assignment (D1) in electronic format with the list of officers or inspectors (I1) assigned to each individual inspection by the inspection agency (I);
• acquiring, through the mobile device (M) in which the application (A) has been installed, information and contents relating to an inspection carried out on a container (C), which information and contents are transmitted to the servers (21-24) to be readily available in the system (1), thereby creating, integrating and updating the inspection report document (D2);
• automatically notifying the respective shipping agents (S) about the results of each inspection carried out on each container (C).

11. Method according to claim 10, wherein the step of monitoring the electronic mail server (21) is followed by a step of creating a transport order (Tr), in electronic format, to allow tracking the movements of the container (C) within the mercantile port or terminal (T).

12. Method according to claim 10, comprising a step of verifying the data entered in the inspection report (D2), for the purpose of identifying any data logging errors and providing assistance if requested by the shipping agents (S).

13. Method according to claim 10, wherein the step of digitally registering the delegation assignment (D1) is followed by a step of automatically notifying the respective shipping agents (S) about the assignment of a delegation for the inspection of a container (C).

## Patentansprüche

1. Automatisiertes System (1) zur Inspektion von Waren, die sich in Containern (C) befinden, welche sich in Handelshäfen oder Terminals (T) befinden, wobei eine Vielzahl von Containern (C) zur Verladung bereitgestellt wurden;
wobei das System (1) Folgendes umfasst:
- einen E-Mail-Server (21), der zum Empfangen und Versenden von E-Mails (E) ausgelegt ist;
- mindestens einen Applikationsserver (22), in dem eine Vielzahl von Applikationen (221, 222, 223, 224) gespeichert und ausgeführt werden;
- mindestens einen Ursprungs-Content-Server (23), der zum Speichern einer Vielzahl von Inhalten und Daten ausgelegt ist;
- mindestens einen Gateway-Server (24), der zum Verbinden eines oder mehrerer Netzwerke (4), mit denen die genannten Server (20, 22, 23) verbunden werden können, ausgelegt ist;
- eine Vielzahl von mobilen Geräten (M), wobei jedes der mobilen Geräte (M) eine Applikation (A) installiert hat, die ausgelegt ist, sich über mindestens ein Netzwerk (4) mit den Servern (21, 22, 23, 24) zu verbinden; jedes mobile Gerät (M) umfasst eine Kamera, ein Display und ein oder mehrere Eingabewerkzeuge; wobei die Applikation (A) ausgelegt ist, mit den Servern (21, 22, 23, 24) zusammenzuarbeiten, um mindestens einen Inhalt oder ein Datum anzuzeigen, Eingaben eines Benutzers (U) zu empfangen und die Eingaben des Benutzers (U) an die Server (21, 22, 23, 24) zu senden;
wobei der Applikationsserver (22) ausgelegt ist, ein Webportal (W) zu unterstützen;
**dadurch gekennzeichnet, dass**
jeder Spediteur (S), Inhaber eines oder mehrerer Container (C), Zugang zu dem Webportal (W) erhalten kann, z.B. mittels eines Computers oder eines intelligenten Geräts, um: Anträge auf Bereitstellung eines oder mehrerer Container (C), für die der Spediteur (S) eine Inspektionsanfrage von einer Inspektionsstelle (I) erhalten hat, zu stellen; Informationen über bereits durchgeführte und/oder noch durchzuführende Inspektionen der Container (C) anzuzeigen, Informationen zu jeder Inspektion sowie etwaige Aktualisierungen abzurufen;
wobei der Applikationsserver (22) eine erste Applikation (221) umfasst, die ausgelegt ist, die über das Webportal (W) von einem oder mehreren Spediteuren (S) empfangenen Bereitstellungsanträge zu verwalten und die Bereitstellungsanträge an den Betreiber eines Terminals (T) zu senden, um dem Betreiber des Terminals (T) die Vorbereitung der Container (C) zur Inspektion zu ermöglichen;
wobei der Applikationsserver (22) eine zweite Applikation (222) umfasst, die ausgelegt ist, mindestens eine vom Betreiber des Terminals (T) empfangene E-Mail zu verarbeiten, die eine Liste der Container (C) enthält, die der Betreiber des Terminals (T) an einem bestimmten Datum zur Inspektion vorbereiten kann;
wobei die zweite Applikation (222) ausgelegt ist,
- die Identifikationsdaten jedes Containers (C), der vom Betreiber des Terminals (T) zur Inspektion vorbereitet wird, zu extrahieren;
- eine Delegationszuweisung (D1) digital zu registrieren, durch die eine Inspektionsstelle (I) Informationen über den Inspektor (I1) bereitstellt, der jedem Container (C) zugeordnet ist;
wobei die zweite Applikation (222) weiterhin ausgelegt ist, die Identifikationsdaten jedes Containers (C) mit anderen, von einem externen Server (O) bereitgestellten Daten abzugleichen und diese dem System (1) zur Verfügung zu stellen;
wobei der Applikationsserver (22) eine dritte Applikation (223) umfasst, die ausgelegt ist, die während einer Inspektion eines Containers (C) generierten Informationen und Inhalte in Echtzeit zu gruppieren, um ein Inspektionsberichtsdokument (D2) im elektronischen Format zu erstellen, zu integrieren und zu aktualisieren, das die Informationen und Inhalte zu einer an einem Container (C) durchgeführten Inspektion enthält;
wobei die Applikation (A) ausgelegt ist, über das mobile Gerät (M) während der Inspektion jedes einzelnen Containers (C) Informationen und Inhalte zu erfassen und/oder zu generieren;
wobei der Applikationsserver (22) eine vierte Applikation (224) umfasst, die ausgelegt ist, Benachrichtigungen zu erstellen, die z.B. über den E-Mail-Server (21) an die Spediteure (S) übermittelt werden;
wobei die Benachrichtigungen Informationen, Inhalte und/oder Aktualisierungen zu den vom System (1) für die Inspektionen verarbeiteten Daten enthalten, einschließlich der Registrierung der Delegationszuweisung (D1) und/oder des Inspektionsberichtsdokuments (D2) im elektronischen Format;
wobei die Applikation (A) ausgelegt ist, die Informationen und/oder Inhalte bezüglich der Registrierung der Delegationszuweisung (D1) und des Inspektionsberichtsdokuments (D2) anzuzeigen, zu integrieren und zu aktualisieren;
wobei die Informationen und/oder Inhalte, die in der Registrierung der Delegationszuweisung (D1) und im Inspektionsberichtsdokument (D2) enthalten sind, in Echtzeit im Webportal (W) angezeigt und aktualisiert werden können.

2. System (1) nach Anspruch 1, wobei die erste Applikation (221) ausgelegt ist, die Identifikationsdaten jedes Containers (C), für den der Spediteur (S) einen Bereitstellungsantrag gestellt hat, zu extrahieren.

3. System (1) gemäß Anspruch 1 oder 2, wobei die zweite Applikation (222) dazu ausgelegt ist, einen Transportauftrag (Tr) in elektronischem Format zu erstellen, zu integrieren und zu aktualisieren, durch den die Bewegungen jedes einzelnen Containers (C) verfolgt werden;
die Benachrichtigungen Informationen, Inhalte und/oder Aktualisierungen in Bezug auf die vom System (1) für die Inspektionen verarbeiteten Daten enthalten, einschließlich des Transportauftrags (Tr);
die im Transportauftrag (Tr) enthaltenen Informationen und/oder Inhalte in Echtzeit auf dem Webportal (W) angezeigt und aktualisiert werden können.

4. System (1) gemäß Anspruch 1, wobei der Inspektionsbericht (D2) so ausgelegt ist, dass er Informationen zu jedem zu inspizierenden Container (C) enthält, darunter mindestens die folgenden Angaben: Containerkennnummer (C); Kennung des Spediteurs (S); Art der Inspektion; Name des Inspektors (I1); Inspektionsbereich oder -ort; Handelsklasse, einschließlich beispielsweise: Import-, Export- oder Umschlagverkehr; Plombennummer vor dem Öffnen des Containers (C); Nummer der neuen Plombe, die am Ende der Inspektion beim Schließen des Containers (C) angebracht wurde;
und mindestens die folgenden Inhalte: mindestens ein Foto des Containers (C); mindestens ein Foto des Siegels vor dem Öffnen des Containers (C); mindestens ein Foto der im Container enthaltenen Güter nach dem Öffnen des Containers (C); mindestens ein Foto der Güter im Container (C), nachdem die zur Inspektion entnommenen Güter wieder zurückgelegt wurden; mindestens ein Foto des neuen Siegels, das am Ende des Inspektionsverfahrens am Container (C) angebracht wurde.

5. System (1) nach Anspruch 1 oder 4, wobei die während einer Inspektion eines Containers (C) durch die Applikation (A) erstellten und erfassten Informationen und Inhalte Folgendes umfassen: Bilderfassung; Erstellung von Textinhalten; und/oder Empfang von Eingaben des Benutzers (U).

6. System (1) nach Anspruch 5 oder 4, wobei der Inspektionsbericht (D2) auch eine Kopie des vom Inspektor (I1) ausgestellten Belegs umfasst, der mittels des mobilen Geräts (M) als Foto aufgenommen wurde.

7. System nach Anspruch 1, wobei die Anwendung (A) so programmiert ist, dass ein Benutzer (U) die Inspektionsvorgänge an einem Container (C) starten kann, indem er über die auf dem mobilen Gerät (M) installierte Anwendung (A) die Daten zu einem zu inspizierenden Container (C) erfasst.

8. System nach Anspruch 1, wobei die Applikation (A) einen lokalen Server umfasst, der in einem Speicherbereich des mobilen Geräts (M) erstellt wurde und dazu ausgelegt ist, die Inhalte und Daten zu speichern, wenn keine Verbindung zu dem Netzwerk (4) besteht.

9. System nach Anspruch 1, wobei die Anwendung (A) oder eine spezielle Seite des Webportals (W) es dem Benutzer (U) ermöglicht, die Registrierung der Delegierungszuweisung (D1) mit dem Namen des für jede Inspektion zugewiesenen Inspektors (I1) zu aktualisieren.

10. Verfahren zur Inspektion von Waren in Handelshäfen; wobei das Verfahren folgende Schritte umfasst:
- Bereitstellen eines Systems (1) zur Inspektion von Waren in Handelshäfen gemäß Anspruch 1;
- Überwachen des Webportals (W), um die Einreichung einer oder mehrerer Anfragen zur Bereitstellung eines oder mehrerer Container (C) durch einen oder mehrere Spediteure (S) festzustellen;
- Verarbeiten der empfangenen Bereitstellungsanträge, die gruppiert und an den Betreiber eines Terminals (T) weitergeleitet werden;
- Überwachen des eingehenden E-Mail-Servers (21) auf den Empfang einer E-Mail vom Betreiber eines Terminals (T), die eine Liste der Container (C) enthält, für die die Möglichkeit der Vorbereitung zur Inspektion bestätigt wird;
- Digitales Registrieren einer Delegationszuweisung (D1) im elektronischen Format mit der Liste der von der Inspektionsstelle (I) für jede einzelne Inspektion zugewiesenen Beamten oder Inspektoren (I1);
- Erfassen von Informationen und Inhalten zu einer an einem Container (C) durchgeführten Inspektion über das mobile Gerät (M), auf dem die Applikation (A) installiert ist, wobei die Informationen und Inhalte an die Server (21-24) übertragen werden, um im System (1) unmittelbar verfügbar zu sein, wodurch das Inspektionsberichtsdokument (D2) erstellt, integriert und aktualisiert wird;
- Automatisches Benachrichtigen der jeweiligen Spediteure (S) über die Ergebnisse jeder an jedem Container (C) durchgeführten Inspektion.

11. Verfahren nach Anspruch 10, wobei auf den Schritt des Überwachens des E-Mail-Servers (21) ein Schritt des Erstellens eines Transportauftrags (Tr) im elektronischen Format folgt, um die Bewegungen des Containers (C) innerhalb des Handelshafens oder Terminals (T) nachzuverfolgen.

12. Verfahren nach Anspruch 10, umfassend einen Schritt der Überprüfung der in den Inspektionsbericht (D2) eingegebenen Daten, um etwaige Fehler bei der Datenerfassung zu identifizieren und auf Anfrage der Spediteure (S) Unterstützung zu leisten.

13. Verfahren nach Anspruch 10, wobei auf den Schritt des digitalen Registrierens der Delegationszuweisung (D1) ein Schritt des automatischen Benachrichtigens der jeweiligen Spediteure (S) über die Zuweisung einer Delegation zur Inspektion eines Containers (C) folgt.

## Revendications

1. Système automatisé (1) pour inspecter les marchandises contenues dans des conteneurs (C) situés dans des ports ou des terminaux de commerce (T), où une pluralité de conteneurs (C) ont été positionnés en attente d'expédition ;
ledit système (1), comprenant :
- un serveur de courrier électronique (21) adapté pour recevoir et envoyer des courriels (E) ;
- au moins un serveur d'applications (22), dans lequel une pluralité d'applications (221, 222, 223, 224) sont enregistrées et exécutées de manière appropriée ;
- au moins un serveur d'origine de contenu (23), adapté pour stocker une pluralité de contenus et de données ;
- au moins un serveur de passerelle (24), adapté pour interconnecter un ou plusieurs réseaux (4) auxquels lesdits serveurs (20, 22, 23) peuvent être connectés ;
- une pluralité de dispositifs mobiles (M), chacun des dispositifs mobiles (M) présentant, installée en son sein, une application (A) adaptée pour se connecter aux serveurs (21, 22, 23, 24) via au moins un réseau (4) ; chaque dispositif mobile (M) comprenant une caméra, un écran et un ou plusieurs outils d'écriture ;
ladite application (A) étant adaptée pour coopérer avec lesdits serveurs (21, 22, 23, 24) afin de permettre l'affichage d'au moins un contenu ou une donnée, la réception d'une entrée d'un utilisateur (U) et l'envoi de l'entrée de l'utilisateur (U) aux serveurs (21, 22, 23, 24) ;
ledit serveur d'applications (22) étant adapté pour prendre en charge un portail Web (W) ;
**caractérisé en ce que** chaque agent d'expédition (S), détenteur d'un ou plusieurs conteneurs (C), peut accéder audit portail Web (W), par exemple au moyen d'un ordinateur ou d'un dispositif intelligent, afin de : déposer des demandes de mise à disposition d'un ou plusieurs conteneurs (C) pour lesquels l'agent maritime (S) a reçu une demande d'inspection de la part d'une agence d'inspection (I) ; afficher des informations sur des inspections déjà effectuées et/ou à effectuer sur les conteneurs (C), consulter des informations associées à chaque inspection et leurs éventuelles mises à jour ;
ledit serveur d'applications (22) comprenant une première application adaptée pour gérer les demandes de mise à disposition reçues via ledit portail Web (W) d'un ou plusieurs agents d'expédition (S), et pour envoyer les demandes de mise à disposition au propriétaire d'un terminal (T) afin de permettre au propriétaire du terminal (T) de préparer les conteneurs (C) pour inspection ;
ledit serveur d'applications (22) comprenant une deuxième application (222) adaptée pour traiter au moins un courrier électronique reçu de la part dudit propriétaire du terminal (T), comprenant une liste des conteneurs (C) que le propriétaire du terminal (T) peut préparer pour une inspection à une date spécifique ; ladite deuxième application (222) étant adaptée pour :
- extraire les données d'identification de chaque conteneur (C) qui sera préparé pour inspection par ledit propriétaire du terminal (T) ;
- enregistrer numériquement une affectation de délégation (D1), par l'intermédiaire de laquelle une agence d'inspection (I) met à disposition des informations concernant l'inspecteur (I1) affecté à chaque conteneur (C) ;
ladite deuxième application (222) est en outre adaptée pour une vérification des données d'identification de chaque conteneur (C) avec d'autres données, ces dernières étant mises à disposition par un serveur externe (O), les mettant à la disposition dudit système (1) ;
ledit serveur d'applications (22) comprenant une troisième application (223) adaptée pour regrouper, en temps réel, les informations et les contenus générés lors d'une inspection d'un conteneur (C), en créant, intégrant et mettant ainsi à jour un document de rapport d'inspection (D2) sous format électronique, qui contient les informations et les contenus relatifs à une inspection effectuée sur un conteneur (C) ;
ladite application (A) est adaptée pour, par l'intermédiaire du dispositif mobile (M), acquérir et/ou générer des informations et des contenus lors de l'inspection de chaque conteneur individuel (C) ;
ledit serveur d'applications (22) comprenant une quatrième application (224) adaptée pour créer des notifications à transmettre, par exemple via le serveur de courrier électronique (21), aux agents d'expédition (S) ;
lesdites notifications contiennent des informations, des contenus et/ou des mises à jour relatifs aux données traitées par le système (1) pour les inspections, y compris l'enregistrement d'attribution de délégation (D1) ; et/ou le document de rapport d'inspection (D2), sous format électronique ;
ladite application (A) étant adaptée pour afficher, intégrer et mettre à jour les informations et/ou les contenus relatifs audit enregistrement d'affectation de délégation (D1) et audit document de rapport d'inspection (D2) ;
les informations et/ou les contenus qui sont contenus dans ledit enregistrement d'affectation de délégation (D1) et dans ledit document de rapport d'inspection (D2) peuvent être visualisés et mis à jour en temps réel sur ledit portail Web (W).

2. Système (1) selon la revendication 1, dans lequel ladite première application (221) est adaptée pour extraire les données d'identification de chaque conteneur (C) pour lequel l'agent d'expédition (S) a déposé une demande de mise à disposition.

3. Système (1) selon la revendication 1 ou 2, dans lequel ladite deuxième application (222) est adaptée pour créer, intégrer et mettre à jour un ordre de transport (Tr) sous format électronique, par l'intermédiaire duquel les mouvements de chaque conteneur individuel (C) sont suivis ;
lesdites notifications contiennent des informations, des contenus et/ou des mises à jour relatives aux données traitées par le système (1) pour les inspections, y compris l'ordre de transport (Tr) ;
les informations et/ou les contenus qui sont contenus dans l'ordre de transport (Tr) peuvent être visualisés et mis à jour en temps réel sur ledit portail web (W).

4. Système (1) selon la revendication 1, dans lequel ledit rapport d'inspection (D2) est adapté pour contenir des informations relatives à chaque conteneur (C) à inspecter, y compris au moins les informations suivantes : numéro d'identification de conteneur (C) ; identifiant de l'agent d'expédition (S) ; type d'inspection ; nom de l'inspecteur (I1) ; zone ou lieu d'inspection ; classe commerciale, y compris, par exemple : trafic d'importation, d'exportation ou de transbordement ; numéro de scellé avant l'ouverture du conteneur (C) ; numéro du nouveau scellé apposé à la fin de l'inspection lorsque le conteneur (C) est fermé ;
et au moins les contenus suivants : au moins une photographie du conteneur (C) ; au moins une photographie du sceau avant l'ouverture du conteneur (C) ; au moins une photographie des marchandises contenues dans le conteneur après l'ouverture du conteneur (C) ; au moins une photographie des marchandises à l'intérieur du conteneur (C) après que les marchandises déplacées pour inspection ont été réintroduites ; au moins une photographie du nouveau sceau apposé sur le conteneur (C) à la fin de la procédure d'inspection.

5. Système (1) selon la revendication 1 ou 4, dans lequel les informations et les contenus créés et acquis, par l'intermédiaire de ladite application (A), au cours d'une inspection d'un conteneur (C) sont : une acquisition d'images ; une création de contenus textuels ; et/ou une réception d'entrées de la part dudit utilisateur (U).

6. Système (1) selon la revendication 5 ou 4, dans lequel ledit rapport d'inspection (D2) comprend également une copie du reçu délivré par l'inspecteur (I1), acquis sous la forme d'une photographie au moyen dudit dispositif mobile (M).

7. Système selon la revendication 1, dans lequel ladite application (A) est programmée de telle sorte qu'un utilisateur (U) peut commencer les opérations d'inspection sur un conteneur (C) en acquérant, par l'intermédiaire de l'application (A) installée dans le dispositif mobile (M), les données relatives à un conteneur (C) à inspecter.

8. Système selon la revendication 1, dans lequel ladite application (A) comprend un serveur local, créé dans une partie de mémoire du dispositif mobile (M), adapté pour stocker les contenus et les données en l'absence d'une connexion audit réseau (4).

9. Système selon la revendication 1, dans lequel l'application (A), ou une page dédiée dudit portail Web (W), permet à l'utilisateur (U) de mettre à jour ledit enregistrement d'affectation de délégation (Dl) avec le nom de l'inspecteur (I1) affecté à chaque inspection.

10. Procédé d'inspection de marchandises dans de ports marchands de commerce ;
ledit procédé comprenant les étapes suivantes consistant à :
• mettre à disposition un système (1) d'inspection de marchandises dans des ports de commerce selon la revendication 1 ;
• surveiller le portail Web (W) pour déterminer le dépôt, par un ou plusieurs agents d'expédition (S), d'une ou plusieurs demandes de mise à disposition d'un ou plusieurs conteneurs (C) ;
• traiter les demandes de mise à disposition reçues, qui sont regroupées et transmises au propriétaire d'un terminal (T) ;
• surveiller le serveur de courrier électronique entrant (21) pour la réception d'un courriel dudit propriétaire d'un terminal (T), qui comprend une liste de conteneurs (C) pour lesquels la possibilité de préparer les conteneurs (C) pour une inspection est confirmée ;
• enregistrer numériquement une affectation de délégation (Dl) sous format électronique avec la liste d'agents ou d'inspecteurs (I1) affectés à chaque inspection individuelle par l'agence d'inspection (I) ;
• acquérir, par l'intermédiaire du dispositif mobile (M) dans lequel l'application (A) a été installée, des informations et des contenus relatifs à une inspection effectuée sur un conteneur (C), lesquelles informations et contenus sont transmis aux serveurs (21-24) pour être facilement disponibles dans le système (1), en créant, intégrant et mettant ainsi à jour le document de rapport d'inspection (D2) ;
• informer automatiquement les agents d'expédition respectifs (S) des résultats de chaque inspection effectuée sur chaque conteneur (C).

11. Procédé selon la revendication 10, dans lequel l'étape de surveillance du serveur de courrier électronique (21) est suivie d'une étape de création d'un ordre de transport (Tr), sous format électronique, pour permettre le suivi des mouvements du conteneur (C) à l'intérieur du port ou terminal de commerce (T).

12. Procédé selon la revendication 10, comprenant une étape de vérification des données entrées dans le rapport d'inspection (D2), dans le but d'identifier toute erreur de consignation de données et de fournir une assistance si les agents d'expédition (S) le demandent.

13. Procédé selon la revendication 10, dans lequel l'étape d'enregistrement numérique de l'affectation de délégation (D1) est suivie d'une étape de notification automatique aux agents d'expédition respectifs (S) de l'affectation d'une délégation pour l'inspection d'un conteneur (C).
